# EUROPEAN PATENT APPLICATION

(11) **EP 1 641 005 A1**
(43) Date of publication of application: **29.03.2006**
(21) Application number: 04745725.4
(22) Date of filing: 03.06.2004
(51) Int. Cl.: H01G 9/04, C25F 3/04

(54) **METHOD FOR PRODUCING ALUMINUM MATERIAL FOR ELECTROLYTIC CAPACITOR ELECTRODE, ALUMINUM MATERIAL FOR ELECTROLYTIC CAPACITOR ELECTRODE, METHOD FOR PRODUCING ELECTRODE MATERIAL FOR ELECTROLYTIC CAPACITOR, AND ALUMINUM ELECTROLYTIC CAPACITOR**

(30) Priority: 03.06.2003 JP 2003157479
(71) Applicant: Showa Denko K.K., Tokyo 105-8518 (JP)
(72) Inventor: NISHIMORI, Hideki, c/o Sakai Regional Office, Sakai-shi, Osaka 590-0982 (JP); KODAMA, Kazuhiro, c/o Sakai Regional Office, Sakai-shi, Osaka 590-0982 (JP)
(74) Representative: Viering, Jentschura & Partner
(86) International application number: PCT/JP2004/008095
(87) International publication number: WO 2004/112066

(57) **Abstract**

An aluminum material for electrolytic capacitor electrodes is produced by bringing the surface of a cold-rolled aluminum material into contact with an aqueous acid solution containing one or more acids selected among sulfuric acids, hydrochloric acids and acids containing phosphorus, and then annealing the aluminum material. If necessary, the aluminum material is degreased before being brought into contact with the aqueous acid solution.

## Description

This application claims priority to Japanese Patent Application No. 2003-157479 filed on June 3, 2003, the entire disclosure of which is incorporated herein by reference in its entirety.

### Technical Field

The present invention relates to a method for producing an aluminum material for electrolytic capacitor electrodes, an aluminum material for electrolytic capacitor electrodes, a method for producing an electrode material for electrolytic capacitors, and an aluminum electrolytic capacitor.

In this description, the term "aluminum" is used as aluminum and alloys thereof, and aluminum material includes a foil, a plate, and products thereof.

### Background Art

Aluminum materials generally used as an electrode material for aluminum electrolytic capacitors are treated by an electrochemical or a chemical etching to expand the effective surface areas of the aluminum material in order to enhance a capacitance.

In producing an aluminum material for electrolytic capacitor electrode, where tunnel-structured pits are generated by a direct current etching method to grow (100) face crystal orientation, in general, the aluminum material is subjected to final annealing at around 500° C in an inert gas or in vacuum. Final annealing takes place in a process later than finish cold rolling.

As characteristics of an oxide film of a surface layer of the aluminum material to be obtained through the final annealing have a great influence on subsequent etching characteristics, it is important how the aluminum surface layer is controlled by washing the aluminum material after rolling and before final annealing.

On the surface of a rolled aluminum material, parts that became exposed due to rolling are newly oxidized, and oil adheres thereto during rolling. Thus, the oxide film of the surface layer is unstable, and if the aluminum material annealed directly after rolling is subjected to electrolytic etching, etching unevenness may occur.

A possible method of preventing the etching unevenness is to wash the rolled aluminum material with an organic solvent or an alkali aqueous solution, after rolling and before final annealing it.

There is a problem, however, that an organic cleaning solvent cannot easily remove oil being adhered during rolling. In addition, although washing with an alkali aqueous solution can remove the adhered oil, the surface of aluminum after washing has a number of Al-OH groups, which causes poor stability of the film. Hence, in order to generate a film that is stabilized and has less aging, a treatment with nitric acid prior to the final annealing is now under consideration.

For example, Japanese Unexamined Laid-open Patent Publication No. 60-92489 discloses a method for producing aluminum foils for electrolytic capacitors wherein before and/or after cold rolling of a foil, the foil is treated with a cleaning agent containing as a main component nitric acid. It is stated that according to the method described in the patent publication, the cleaning agent containing, as a main component, nitric acid not only easily decomposes and removes a rolling oil adhered to the surface of the aluminum foil, but also forms a uniform passive oxide film that is stabilized and has less aging, which leads to generation of a thin oxide film in the following processes and renders the etching effect substantial.

Japanese Unexamined Laid-open Patent Publication No. 63-86878 describes the method for producing an aluminum material for electrolytic capacitor electrode wherein a surface of an aluminum foil after rolling is annealed after being subjected to an adsorption treatment in which the surface is brought into contact with acids or compounds thereof that are highly adsorptive to aluminum, wherein nitric acid is exemplified as an acid to be used in the adsorption treatment.

However, even though the methods comprising annealing after stabilizing the oxide film of the surface layer of the aluminum material with nitric acid, which were described in Japanese Unexamined Laid-open Patent Publications No. 60-92489 and No. 63-86878, were used, enhancement of capacitance was limited.

The present invention aims to solve the above problems of the treatment with acids before final annealing in conventional productions of aluminum materials for electrolytic capacitor electrodes, and to provide a method for producing an aluminum material for electrolytic capacitor electrodes with excellent etching characteristics, an aluminum material for electrolytic capacitor electrodes, a method for producing an electrode material for electrolytic capacitors and aluminum electrolytic capacitors.

### Disclosure of Invention

With the above aims, the method for producing an aluminum material for electrolytic capacitor electrodes of the present invention has the following structures as recited in Items (1) to (16).
(1) A method for producing an aluminum material for electrolytic capacitor electrodes, wherein a cold-rolled surface of an aluminum material is brought into contact with an acidic aqueous solution containing one or more acids selected from the group consisting of sulfuric acid, hydrochloric acid, and acids including phosphorus, and then the aluminum material is annealed.
(2) The method for producing an aluminum material for electrolytic capacitor electrodes as recited in the aforementioned Item 1, wherein the aluminum material is degreased after cold rolling and before contacting with the acidic aqueous solution.
(3) The method for producing an aluminum material for electrolytic capacitor electrodes as recited in the aforementioned Item 2, wherein the degreasing is carried out with an organic solvent.
(4) The method for producing an aluminum material for electrolytic capacitor electrodes as recited in the aforementioned Item 2 or 3, wherein the degreasing is carried out with water containing a surfactant.
(5) The method for producing an aluminum material for electrolytic capacitor electrodes as recited in any one of the aforementioned Items 1 to 4, wherein a concentration of the sulfuric acid in the acidic aqueous solution is not less than 0.0005 mass% and not more than 60 mass%.
(6) The method for producing an aluminum material for electrolytic capacitor electrodes as recited in the aforementioned Item 5, wherein a concentration of the sulfuric acid in the acidic aqueous solution is not less than 1.2 mass% and not more than 30 mass%.
(7) The method for producing an aluminum material for electrolytic capacitor electrodes as recited in the aforementioned Item 6, wherein a concentration of the sulfuric acid in the acidic aqueous solution is not less than 1.2 mass% and not more than 9.5 mass%.
(8) The method for producing an aluminum material for electrolytic capacitor electrodes as recited in any one of the aforementioned Items 1 to 4, wherein a concentration of the hydrochloric acid in the acidic aqueous solution is not less than 0.0005 mass% and not more than 30 mass%.
(9) The method for producing an aluminum material for electrolytic capacitor electrodes as recited in the aforementioned Item 8, wherein a concentration of the hydrochloric acid in the acidic aqueous solution is not less than 0.05 mass% and not more than 30 mass%.
(10) The method for producing an aluminum material for electrolytic capacitor electrodes as recited in the aforementioned Item 9, wherein a concentration of the hydrochloric acid in the acidic aqueous solution is not less than 1.2 mass% and not more than 9.5 mass%.
(11) The method for producing an aluminum material for electrolytic capacitor electrodes as recited in any one of the aforementioned Items 1 to 4, wherein the acid including phosphorus is orthophosphoric acid and a concentration of the orthophosphoric acid in the acidic aqueous solution is not less than 1.2 mass% and not more than 30 mass%.
(12) The method for producing an aluminum material for electrolytic capacitor electrodes as recited in the aforementioned Item 11, wherein a concentration of the orthophosphoric acid in the acidic aqueous solution is not less than 1.2 mass% and not more than 9.5 mass%.
(13) The method for producing an aluminum material for electrolytic capacitor electrodes as recited in any one of the aforementioned Items 1 to 12, wherein a temperature of the acidic aqueous solution is 10° C or higher and 95° C or lower, and a contact time of the aluminum material with the acidic aqueous solution is not less than 0.2 second and not more than 10 minutes.
(14) The method for producing an aluminum material for electrolytic capacitor electrodes as recited in any one of the aforementioned Items 1 to 13, wherein the annealing is carried out in an inert atmosphere at 450 to 600°C.
(15) The method for producing an aluminum material for electrolytic capacitor electrodes as recited in the aforementioned Item 14, wherein the annealing is carried out at 460 to 560°C.
(16) The method for producing an aluminum material for electrolytic capacitor electrodes as recited in any one of the aforementioned Items 1 to 15, wherein an aluminum purity is not less than 99.9 mass%.
   In addition, the aluminum material for electrolytic capacitor electrodes of the present invention has the following structures as recited in Items (17) and (18).
(17) An aluminum material for electrolytic capacitor electrodes produced by the production method as recited in any one of the aforementioned Items 1 to 16.
(18) The aluminum material for electrolytic capacitor electrodes as recited in the aforementioned Item 17, which is an anode material for medium or high voltages.
   In addition, a method for producing an electrode material for electrolytic capacitors of the present invention has the following structures as recited in Items (19) and (20).
(19) A method for producing an electrode material for electrolytic capacitors, wherein an aluminum material produced by the production method as recited in any one of the aforementioned Items 1 to 16 is subjected to etching.
(20) The method for producing an electrode material for electrolytic capacitors as recited in the aforementioned Item 19, wherein at least a part of etching is a direct current etching.
   In addition, an electrolytic capacitor of the present invention has the following structure as recited in Item (21).
(21) An aluminum electrolytic capacitor wherein as an electrode material, an aluminum electrode material manufactured by the production method as recited in the aforementioned Item 19 or 20 is used.
   In the method for producing an aluminum material for electrolytic capacitor electrodes of the present invention, an oxide film of a surface layer on which etch pits can be uniformly dispersed in subsequent etching is formed by bringing a cold-rolled surface of the aluminum material into contact with an acidic aqueous solution and then annealing it under predetermined conditions. By uniformly dispersing etch pits through etching of the above aluminum material, the method intends to expand the effective surface area of the aluminum material and thus increase capacitance.
   As acids contained in the acidic aqueous solution with which the surface of the aluminum material is brought into contact, one or more acids selected from the group consisting of sulfuric acid, hydrochloric acid, and acids including phosphorus are used. As the acids including phosphorus, orthophosphoric acid (hereinafter referred to as phosphoric acid), pyrophosphoric acid, metaphosphoric acid, and polyphosphoric acid are preferable.
   Sulfuric acid and acids containing phosphorous have the effect of stabilizing an oxide film of an aluminum surface layer, and uniformly dispersing etch pits in etching after annealing. In addition, hydrochloric acid has the effect of promoting formation of etch pits in etching following annealing, and of improving dispersibility by forming a number of pits on the whole surface of the aluminum material.

### Best Mode for Carrying Out the Invention

In the method for producing an aluminum material for electrolytic capacitor electrodes of the present invention, an oxide film of a surface layer on which etch pits can be uniformly dispersed in subsequent etching is formed by bringing a cold-rolled surface of the aluminum material into contact with an acidic aqueous solution and then annealing it. Then, by uniformly dispersing etch pits through etching of the aluminum material, the method intends to expand the effective surface area and thus increase capacitance.

In the following, the present invention will be described in detail along the producing processes of aluminum materials for electrolytic capacitor electrodes.

Although an aluminum material is not specifically defined as far as its purity falls within that for electrolytic capacitors, the aluminum material has preferably a purity of not less than 99.9 mass%, and, in particular, not less than 99.95 mass% would be preferable. In the present invention, the purity of aluminum material is determined by subtracting the total concentration (mass%) of Fe, Si, Cu, Mn, Cr, Zn, Ti and Ga from 100 mass%.

Manufacturing of aluminum materials, in general, is conducted in the order of the following: adjustment of soluble components/slab casting, soaking, hot rolling, cold rolling, intermediate annealing, finish cold rolling (rolling at a low rolling reduction), and final annealing. The aluminum material that was subjected to cold rolling (including finish cold rolling) shall be brought into contact with an acidic aqueous solution specified by the invention, and then annealed. It is recommended that the contact take place after cold rolling. Thus, although it is recommended that annealing following it be final annealing, the present invention shall not preclude the possibility of coming into contact with acids prior to annealing other than final annealing.

In addition, no limit is set to any production process and process conditions other than those specified by the present invention, and they shall be conducted according to any conventional method. In addition, conditions of the production processes of the aluminum materials are modified as appropriate, depending on the etching conditions of the aluminum material. Now, an intermediate annealing process is designed to take place during the course of a cold rolling process, for further growing (100) face crystal orientation after final annealing. In addition, washing may take place in a process earlier than intermediate annealing, in order to remove any impurities or oil on the aluminum surface. Although, in particular, no limit is set to a cleaning liquid to be used in processes prior to intermediate annealing, an alkali aqueous solution, an acidic aqueous solution, an organic solvent, etc. may be used.

### [Contact with an Acidic Aqueous Solution]

As an acid to be contained in an acidic aqueous solution with which the surface of the aluminum material is brought into contact, one or more acids may be selected from the group consisting of sulfuric acid, hydrochloric acid, and acids including phosphorus. As the acid including phosphorus, phosphoric acid, pyrophosphoric acid, metaphosphoric acid, and polyphosphoric acid may be used.

Sulfuric acid and acids containing phosphorus have the effect of stabilizing an oxide film of the aluminum surface layer, and uniformly dispersing etch pits in etching after annealing. In addition, hydrochloric acid has the effect of promoting formation of etch pits in etching following annealing, and improving dispersibility by forming a number of pits on the whole surface of aluminum material.

Although the present invention shall not specifically define concentrations of these acids in an acidic aqueous solution, the following concentrations are recommended.

If the concentration of sulfuric acid or phosphoric acid is too low, the stability of an oxide film of an aluminum surface layer is inadequate, which is thus less effective in improving capacitance. If the concentration is too high, many sulfuric acid ions or phosphoric acid ions may remain on the aluminum surface even though it is washed with water after having contact with the acidic aqueous solution. Thus, the oxide film of the surface layer to be obtained by subsequent annealing is likely to be heterogeneous. For these reasons, a preferable concentration range of sulfuric acid would be not less than 0.0005 mass% and not more than 60 mass%. A more preferable range would be not less than 1.2 mass% and not more than 30 mass%. Particularly, the range of not less than 1.2 mass% and not more than 9.5 mass% would be preferable. In addition, a preferable concentration range of phosphoric acid would be not less than 1.2 mass% and not more than 30 mass%, and a more preferable range would be not less than 1.2 mass% and not more than 9.5 mass%.

If a concentration of hydrochloric acid is too low, the effect of promoting pit formation in electrolytic etching of aluminum material to be obtained by subsequent annealing is small. If the concentration is too high, the aluminum material dissoleves heterogeneously, thus lowering the pit dispersibility in electrolytic etching of the aluminum material that is obtained by subsequent annealing. A preferable concentration range of hydrochloric acid would be not less than 0.0005 mass% and not more than 30 mass% . A more preferable range would be not less than 0.05 mass% and not more than 30 mass%. Particularly, a range of not less than 1.2 mass% and not more than 9.5 mass% would be preferable.

Although a liquid temperature of the acidic aqueous solution is not specifically defined, it is preferably 10°C or higher and 95° C or lower. If the liquid temperature is lower than 10° C, the effect of improving capacitance due to pit dispersibility shall be inadequate. Even though liquid having a liquid temperature of 95° C or higher is used, it does not enhance the capacitance more than liquid having a liquid temperature of 10°C or higher and 95° C or lower, and lead to increased cost due to energy consumption. A more preferable liquid temperature is 10 to 85° C, particularly preferably, it is 20 to 70° C. Also, a contact time of the aluminum material with the acidic aqueous solution is not specifically defined, it is preferably not less than 0.2 second and not more than 10 minutes, more preferably not less than 0.5 second and not more than 5 minutes. If the contact time is less than 0.2 second, the effect of enhancing capacitance will be small. Even when the aluminum material is subjected to come in contact for longer than 10 minutes, the effect of enhancing the capacitance will not be improved, and productivity will be lowered due to processing for extended period of time.

In addition, organic carboxylic acids and organic sulfonic acids may be used as an acid contained in the acidic aqueous solution with which the surface of the aluminum material is brought into contact.

Although a method for bringing the aluminum material into contact with the acidic aqueous solution is not specifically defined, immersion, contact of the aluminum material with an aqueous solution, spraying, etc. may be possible.

### [Degreasing]

It is preferable that the aluminum material that has undergone a cold rolling process is improved its surface condition by carrying out degreasing before coming into contact with an acidic aqueous solution. Degreasing removes oil adhered to the surface of the aluminum material, ensuring that a stabilized and homogeneous surface oxide film will be formed by subsequent contact with the acidic aqueous solution and annealing, thus enabling better dispersibility of etch pits.

As a method of degreasing, a method of washing the aluminum material with an organic solvent or water containing a surfactant or a method of bringing the aluminum material that has undergone rolling into contact with a heating body such as a heat roll can be exemplified.

Although the organic solvent is not specifically defined, by way of example, it may be alcohol, diol, aromatic hydrocarbons such as toluene, xylene, etc., alkane hydrocarbons, cyclohexane, ketone, ether, ester, petrochemical products, etc.

Further specific examples of the alcohol mentioned above include methanol (CH₃OH), ethanol(C₂H₅OH), 1-propanol(CH₃CH₂CH₂OH), 2-propanol(CH₃CH₂(OH)CH₃), 1-butanol(CH₃CH₂CH₂CH₂OH), 2-butanol (CH₃CH₂CH₂(OH)CH₃), 1-pentanol (CH₃CH₂CH₂CH₂CH₂OH), 2-pentanol (CH₃CH₂CH₂CH₂(OH)CH₃), etc. , and those expressed by CₙH₂ₙ₊₁OH wherein n is a natural number of 1 to 10 are preferable. In addition, alicyclic hydrocarbons such as cyclohexanol, etc. can also be used.

As examples of the diol, 1,2-ethanediol(HOCH₂CH₂OH), 1,2-propanediol(CH₃CH(OH)CH₂OH), 1,3-propanediol(HOCH₂CH₂CH₂OH), etc. may be exemplified.

Examples of the alkane hydrocarbons mentioned above include pentane (C₅H₁₂) , hexane (C₆H₁₄), heptane (C₇H₁₆), octane ( C₈H₁₈) , nonane (C₉H₂₀) , decane (C₁₀H₂₂), etc . , and those expressed by CₙH₂ₙ₊₂ wherein n is a natural number of 5 to 15 are preferable. In addition, any alicyclic hydrocarbon such as cyclohexane, etc. may be applicable.

As examples of the ketone, acetone(CH₃COCH₃), 2-butanone (CH₃COC₂H₅), 3-pentanone(CH₃CH₂COCH₂CH₃), 3-methyl-2-butanone (CH₃COCH(CH₃)₂), etc. may be exemplified, and those expressed by R¹COR² wherein R¹ and R² are each an aliphatic hydrocarbon residue, and a total carbon number in R¹ and R² is not more than 8 are preferable. In addition, any cyclic ketone such as cyclohexanone (C₆H₁₀O), etc., may be used. Examples of the ether include any substance expressed by R¹-O-R² wherein R¹ and R² are each an aliphatic hydrocarbon residue, and a total carbon number of R¹ and R² is not more than 8, and glycolether such as 2-methoxyethanol(CH₃OCH₂CH₂OH), 2-ethoxyethanol (CH₃CH₂OCH₂CH₂OH), 2-butoxyethanol (CH₃CH₂CH₂CH₂ OCH₂CH₂OH), 2 - ( 2- ethoxy) ethoxyethanol (CH₃CH₂OCH₂CH₂OCH₂CH₂OH), etc.

As examples of the ester, acetic ester expressed by CH₃COOR wherein R is an aliphatic hydrocarbon residue with 1 to 5 carbon atoms may be exemplified.

In addition, examples of the petroleum products include industrial-gasoline (JIS K 2201), motor gasoline (JIS K 2202), aviation gasoline (JIS K 2206), lamp oil (JIS K 2203), light oil (JIS K 2204), aviation gasoline (JIS K 2206), petroleum ether (JIS K 8593), petroleum benzene (JIS K 8594), ligroin (JIS K 8937), kerosene, etc.

Although the surfactant is not also specifically defined, anionic surfactants, cationic surfactants, and nonionic surfactants may be used, and these surfactants are added to water, which are used as cleaning liquid.

As the anionic surfactant, sulfate salts and sulfonate may be used.

As further specific sulfate salts, R-OSO₃Na wherein R is a saturated hydrocarbon residue or unsaturated hydrocarbon residue with one double bond, which have 8 to 18 carbon atoms, may be used, and specifically, sodium dodecyl sulfate (C₁₂H₂₅OSO₃Na), sodium hexadecyl sulfate (C₁₆H₃₃OSO₃Na), sodium stearyl sulfate (C₁₈H₃₇OSO₃Na), sodium oleyl sulfate(C₁₈H₃₅OSO₃Na), etc. can be exemplified.

As the sulfonate, those expressed by R-SO₃Na wherein R is a saturated hydrocarbon residue or unsaturated hydrocarbon residue with one double bond, which have 8 to 18 carbon atoms, or R-SO₃Na wherein R is an alkylbenzyl group in which alkyl group has 8 to 14 carbon atoms of a saturated hydrocarbon residue or unsaturated hydrocarbon residue with one double bond, such as sodium dodecylbenzene sulfonate (C₁₂H₂₅-C₆H₄-SO₃Na), etc. may be used.

As the cationic surfactant, quaternary ammonium salts expressed by R-N⁺(CH₃)₃· Cl⁻ wherein R is an unsaturated hydrocarbon residue with 8 to 16 carbon atoms may be used.

As the nonionic surfactant, nonionic polyethyleneglycol type surfactant expressed by R-O-(CH₂CH₂O-)ₙH wherein R is a saturated hydrocarbon residue or unsaturated hydrocarbon residue with one double bond, which have 8 to 16 carbon atoms, and n is 6 to 14, or R-O-(CH₂CH₂O-)ₙH wherein R is an alkyl phenyl residue in which an alkyl group has 8 to 12 carbon atoms of a saturated hydrocarbon residue or unsaturated hydrocarbon residue with one double bond, and n is 6 to 14, may be exemplified. In addition, any surfactant with n exceeding the above limits may be contained in the nonionic surfactant in a molar ratio of 50% or less.

At least one kind of the above surfactant may be added to water and used as a cleaning liquid. Any surfactant with the carbon number below the above range may be used in a molar ratio of 50% or less. Since mixing of the anionic surfactant and the cationic surfactant in water generates precipitates, it would be preferable to avoid mixing.

Although the concentration of the surfactants in a cleaning liquid is not specifically defined, it would be preferably not less than the critical micelle concentration so as to fulfill the degreasing effect.

In addition, only any one of degreasing with the organic solvent and degreasing with the surfactant may take place, or both of them may take place sequentially.

Furthermore, for the purpose of degreasing, a surfactant or an organic solvent that can be mixed with water may be added into an acidic aqueous solution with which the aluminum material is brought into contact. Although kinds of surfactants to be added to the acidic aqueous solution are not specifically defined, the same surfactants as used in the degreasing process before contact with the acidic aqueous solution, to be specific, the anionic surfactants, cationic surfactants, and nonionic surfactants mentioned above may be used. At least one of these surfactant is added into the acidic aqueous solution and may be used, or any surfactant with the carbon number below the above range may be added in a molar ratio of 50% or less. Although the concentration of the surfactant is not specifically defined, it would be preferably not less than critical micelle concentration so as to achieve the washing effect. Although kinds of the organic solvents to be added into the acidic aqueous solution are also not specifically defined, organic solvents used for degreasing prior to contact with the acidic aqueous solution and capable of mixing with water, to be specific, methanol, ethanol, propanol, acetone, diol such as ethyleneglycol, etc. and dioxane, etc. can be exemplified.

### [Annealing]

The aluminum material brought into contact with the acidic aqueous solution is then annealed after being washed and dried. The annealing forms a stabilized oxide film of a surface layer on which etch pits can be uniformly dispersed.

Although the method for drying is not specifically defined, atmospheric heating, inert atmospheric heating, vacuum heating, or contact heating between a heating body and the aluminum material may be used.

In addition, in annealing, it would be preferable to avoid deterioration of etching characteristics by increasing too much the thickness of an oxide film during annealing process, that was formed on the aluminum material in a preprocessing, i.e., an acid-contact process. If it was final annealing, it would be preferable to carry out final annealing so that the total thickness of the oxide film after final annealing is 2.5 to 5 nm measured according to the Hunter-Fowle method (refer to M.S. Hunter and P. Fowle J. Electrochem. Soc., 101 [9], 483(1954)). In addition, preferably, (100) area ratio of the aluminum material after final annealing would be not less than 90%.

Although a processing atmosphere in the annealing is not specifically defined, it would be preferable to heat in an inactive atmosphere wherein there are moisture and oxygen in trace amounts so as not to increase a thickness of an oxide film excessively. To be specific, preferably, heating would take place in an inert gas such as argon, nitrogen, etc., or in a vacuum of 0.1 Pa or less. Particularly preferable annealing atmosphere would be in an inert gas atmosphere.

Although a method for annealing is not specifically defined, it may be batch annealing with the aluminum material wound around a coil, or the material may be wound around the coil after the coil is rewound and the material is continuously annealed. At least either the batch annealing or the continuous annealing may be carried out more than once.

Although the temperature and the duration of annealing are not specifically defined, when the batch annealing is to be done on the coiled material, it would be preferably annealed at 450 to 600°C for a duration of 10 minutes to 50 hours. This is because it might not be possible to obtain a surface on which etch pits could be generated uniformly, and (100) oriented crystal grain growth might be inadequate, if the temperature is less than 450° C or the duration is less than 10 minutes. On the contrary, if annealing takes place above 600°C, the aluminum material tends to stick to each other in the case of the batch annealing on coiled material. In addition, even though it is annealed more than 50 hours, the effect of expanding surface area by etching becomes saturated, even leading to increased thermal energy cost. Preferably, the annealing temperature is 450 to 580°C, in particular, and more preferably 460 to 560°C. Preferably, the annealing time is 20 minutes to 40 hours.

In addition, temperature rising speed/pattern is not specifically defined. Temperature rising at a constant speed is also applicable, or step-by-step temperature rising/cooling by repeating cycles of temperature rising and temperature maintenance may also be applicable. In the annealing process, annealing in the temperature zone of 450 to 600°C for a total duration of 10 minutes to 50 hours may be applicable.

A thickness of the aluminum material for electrolytic capacitors to be obtained after final annealing is not specifically defined. The present invention includes aluminum material referred to as a foil having a thickness of not more than 200 µm and that being thicker.

The aluminum material that has undergone final annealing shall be etched for increasing the magnified surface area ratio and made an electrode material for electrolytic capacitors. Although etching process conditions are not specifically defined, preferably, at least a part of etching would be direct current etching. The direct current etching would allow deep and thick etching in a part that will act as an etch pit nucleation of which was promoted in the annealing, thus producing a number of tunnel-structured pits, and implementing a high capacitance.

After etching process, desirably, it would be good to convert the electrode material into anode material through formation of the dielectric treatment and, particularly, to be used as an electrode material for a medium or high voltages electrolytic capacitor. However, the invention shall not prevent use of the electrode material as cathode material. In addition, electrolytic capacitors using the electrode material could implement a large capacitance.

In addition, measurement of capacitance may be carried out according to a conventional method, and, a method for measuring a capacitance of an etched foil that has undergone formation of the dielectric treatment, at 120 Hz in a 80 g/L aqueous ammonium borate solution at 30° C, for instance, with a stainless plate used as a counter electrode can be exemplified.

### Examples

### (Example 1)

After an aluminum foil having a purity of 99.99 mass% that was rolled to a thickness of 110 µm was degreased with acetone, it was immersed in a 3 mass% of aqueous sulfuric acid solution at 40°C for 60 seconds, then washed with water, and dried in the air sequentially. Then, the aluminum foil was subjected to a temperature rising at 50°C/h from the room temperature in argon atmosphere to 500°C. Then, the aluminum foil was subjected to a final annealing in which it was maintained at 500° C for 24 hours, and then cooled to give an aluminum foil for electrolytic capacitor electrodes.

### (Examples 2 to 32)

After an aluminum foil having a purity of 99.99 mass% that was rolled to a thickness of 110 µm was degreased with acetone, it was immersed in an acidic aqueous solution under the conditions listed in Table 1 or Table 2, then washed with water, and dried in the air sequentially. Then, the aluminum foil was subjected to a temperature rising at 50°C/h from the room temperature to the annealing temperature listed in Table 1 or Table 2. Then, the aluminum foil was subjected to a final annealing in which it was maintained at the annealing temperature listed in Table 1 or Table 2 for 24 hours, and then cooled to give an aluminum foil for electrolytic capacitor electrodes. In Table 1 and Table 2, "phosphoric acid" is orthophosphoric acid.

### (Example 33)

After an aluminum foil having a purity of 99.99 mass% that was rolled to a thickness of 110 µm was immersed in water containing dodecyl sodium sulfate in a proportion of 0.1 mass% to degrease, it was immersed in a 5 mass% aqueous sulfuric acid solution at 40° C for 10 seconds, then washed with water, and dried in the air sequentially. The dried aluminum foil was subjected to a temperature rising at 50°C/h from the room temperature in argon atmosphere to 500° C. Then, the aluminum foil was subjected to a final annealing in which it was maintained at 500° C for 24 hours, cooled and taken out of a furnace to give an aluminum foil for electrolytic capacitor electrodes.

### (Example 34)

An aluminum foil having a purity of 99.99 mass% that was rolled to a thickness of 110 µm was immersed at 70° C for 60 seconds in an aqueous solution containing dodecyl sodium sulfate in a proportion of 0.1 mass% and sulfuric acid in a proportion of 9 mass%. Then, it was washed with water and dried in the air sequentially. The dried aluminum foil was subjected to a temperature rising at 50°C/h from the room temperature in argon atmosphere to 500°C. Then, the aluminum foil was subjected to a final annealing in which it was maintained at 500° C for 24 hours, and then cooled to give an aluminum foil for electrolytic capacitor electrodes.

### (Example 35)

An aluminum foil having a purity of 99.99 mass% that was rolled to a thickness of 110 µm was immersed in a 9 mass% aqueous sulfuric acid solution at 70° C for 60 seconds. Then, it was washed with water and dried in the air sequentially. The dried aluminum foil was subjected to a temperature rising at 50° C/h from the room temperature in argon atmosphere to 500° C. Then, the aluminum foil was subjected to a final annealing in which it was maintained at 500° C for 24 hours, and then cooled to give an aluminum foil for electrolytic capacitor electrodes.

### (Example 36)

After an aluminum foil having a purity of 99.99 mass% that was rolled to a thickness of 110 µm was degreased with n-hexane, it was immersed in a 3 mass% aqueous sulfuric acid solution at 60° C for 10 seconds, then washed with water, and dried in the air sequentially. The dried aluminum foil was subjected to a temperature rising at 50°C/h from the room temperature in argon atmosphere to 500°C. Then, the aluminum foil was subjected to a final annealing in which it was maintained at 500° C for 24 hours, and then cooled to give an aluminum foil for electrolytic capacitor electrodes.

### (Example 37)

After an aluminum foil having a purity of 99.99 mass% that was rolled to a thickness of 110 µm was degreased with acetone, it was immersed in a 55 mass% of aqueous sulfuric acid solution at 40° C for 60 seconds, then washed with water, and dried in the air sequentially. Then, the aluminum foil was subjected to a temperature rising at 50°C/h from the room temperature in argon atmosphere to 500°C. Then, the aluminum foil was subjected to a final annealing in which it was maintained at 500° C for 24 hours, and then cooled to give an aluminum foil for electrolytic capacitor electrodes.

### (Example 38)

After an aluminum foil having a purity of 99.99 mass% that was rolled to a thickness of 110 µm was degreased with acetone, it was immersed in a 7 mass% of aqueous sulfuric acid solution at 93°C for 60 seconds, then washed with water, and dried in the air sequentially. Then, the aluminum foil was subjected to a temperature rising at 50°C/h from the room temperature in argon atmosphere to 500° C. Then, the aluminum foil was subjected to a final annealing in which it was maintained at 500° C for 24 hours, and then cooled to give an aluminum foil for electrolytic capacitor electrodes.

### (Comparative Example 1)

After an aluminum foil having a purity of 99.99 mass% that was rolled to a thickness of 110 µm was subjected to a temperature rising at 50° C/h under argon atmosphere from room temperature to 500°C, it underwent a final annealing in which it was maintained at 500°C for 24 hours, and was cooled to give an aluminum foil for electrolytic capacitor electrodes.

### (Comparative Example 2)

After an aluminum foil having a purity of 99.99 mass% that was rolled to a thickness of 110 µm was degreased with acetone, it was subjected to a temperature rising at 50°C/h under argon atmosphere from room temperature to 500° C. Then, it underwent a final annealing in which it was maintained at 500° C for 24 hours, and was cooled to give an aluminum foil for electrolytic capacitor electrodes.

### (Comparative Example 3)

After an aluminum foil having a purity of 99.99 mass% that was rolled to a thickness of 110 µm was degreased with acetone, it was immersed in a 5 mass% aqueous nitric acid solution at 40° C for 60 seconds, then washed with water, and dried in the air sequentially. The dried aluminum foil was subjected to a temperature rising at 50°C/h from the room temperature in argon atmosphere to 500°C. Then, the aluminum foil was subjected to final annealing in which it was maintained at 500° C for 24 hours, and then cooled to give an aluminum foil for electrolytic capacitor electrodes.

### (Comparative Example 4)

The same procedure of Comparative Example 3 was conducted except that a concentration of nitric acid is 0.2 mass% to give an aluminum foil for electrolytic capacitor electrodes.

After the aluminum foils for electrolytic capacitor electrodes obtained from Examples and Comparative Examples were each immersed in an aqueous solution containing 1.0 mol/l of HCl and 3.5 mol/l of H₂SO₄ at a liquid temperature of 75°C, and they were subjected to electrolytic etching at a current density of 0.2 A/cm². The electrolytic etched foil was further immersed in a solution containing hydrochloric acid and sulfuric acid in the same composition as above at 90° C for 360 seconds to give an etched foil with pits having a larger diameter.

In accordance with the EIAJ standard, the etched foils thus obtained were subjected to a formation of the dielectric treatment at a voltage of 270 V to obtain samples for measurement of a capacitance, and then capacitances were measured. Tables 1 and 2 list the preparation conditions of the aluminum foil for electrolytic capacitor electrodes and relative capacitances when it was assumed that the capacitance of Comparative Example 3 was 100%.

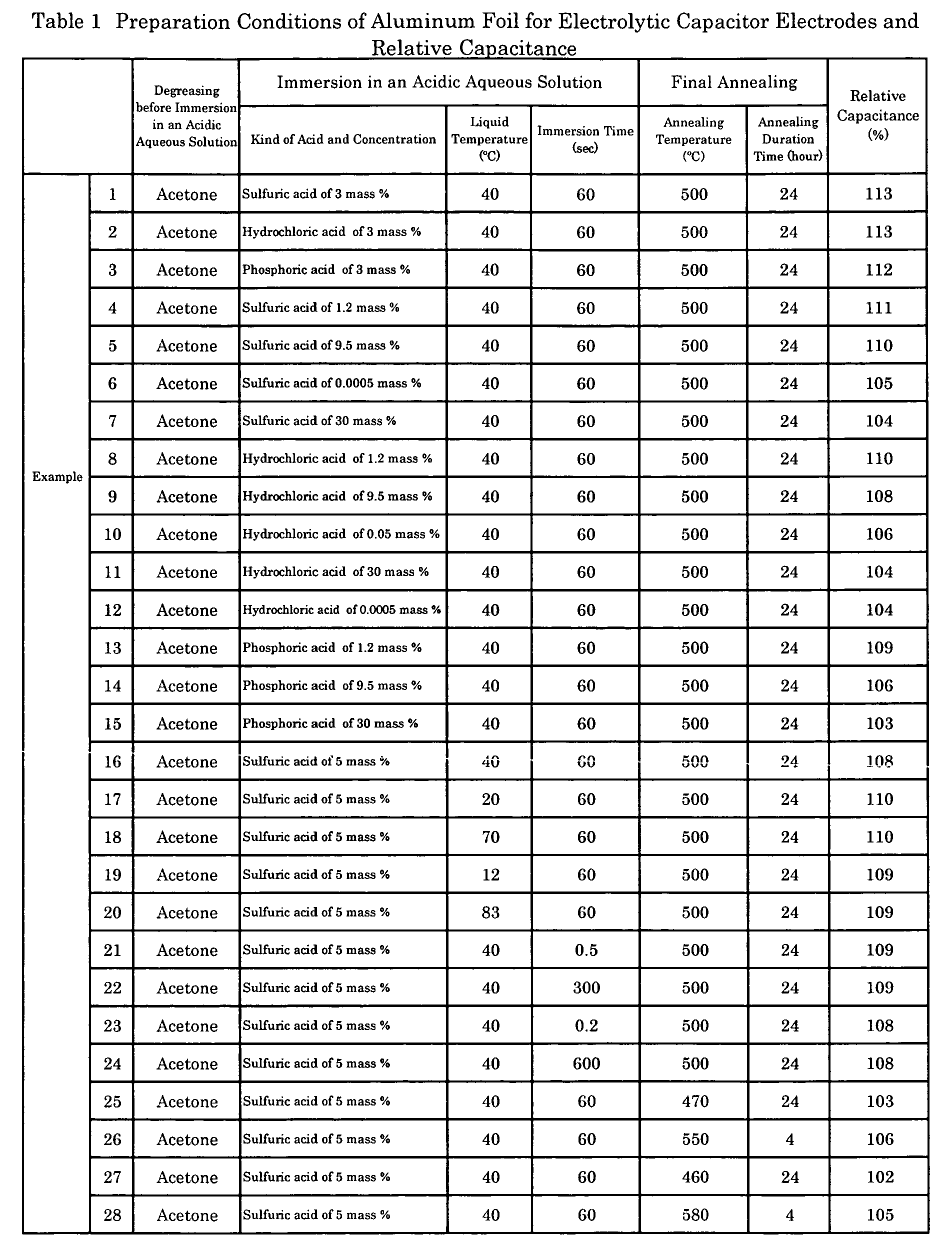

**Table 2 Preparation Conditions of Aluminum Foil for Electrolytic Capacitor Electrodes and Relative Capacitance**

| | | Degreasing before Immersion in an Acidic Aqueous Solution | Immersion in an Acidic Aqueous Solution | | | Final Annealing | | Relative Capacitance (%) |
|---|---|---|---|---|---|---|---|---|
| | | | Kind of Acid and Concentration Surfactant | Liquid Temperature (°C) | Immersion Time (sec) | Annealing Temperature (°C) | Annealing Duration Time (hour) | |
| Example | 29 | Acetone | Sulfuric acid of 3 mass % Hydrochloric acid of 3 mass % | 50 | 60 | 550 | 20 | 108 |
| | 30 | Acetone | Hydrochloric acid of 3 mass % Phosphoric acid of 3 mass % | 30 | 2 | 560 | 4 | 107 |
| | 31 | Acetone | Sulfuric acid of 3 mass % Phosphoric acid of 3 mass % | 30 | 15 | 540 | 4 | 107 |
| | 32 | Acetone | Sulfuric acid of 3 mass % Hydrochloric acid of 3 mass % Phosphoric acid of 3 mass % | 30 | 20 | 550 | 4 | 106 |
| | 33 | Water+Dodecyl sodium sulfate | Sulfuric acid of 5 mass % | 40 | 10 | 500 | 24 | 106 |
| | 34 | - | Sulfuric acid of 9 mass % Dodecyl sodium sulfate | 70 | 60 | 500 | 24 | 106 |
| | 35 | - | Sulfuric acid of 9 mass % | 70 | 60 | 500 | 24 | 104 |
| | 36 | n-hexane | Sulfuric acid of 3 mass % | 60 | 10 | 500 | 24 | 108 |
| | 37 | Acetone | Sulfuric acid of 55 mass % | 40 | 60 | 500 | 24 | 103 |
| | 38 | Acetone | Sulfuric acid of 7 mass % | 93 | 60 | 500 | 24 | 107 |
| Comparative Example | 1 | - | - | - | - | 500 | 24 | 95 |
| | 2 | Acetone | - | - | - | 500 | 24 | 97 |
| | 3 | Acetone | Nitric acid of 5 mass % | 40 | 60 | 500 | 24 | 100 |
| | 4 | Acetone | Nitric acid of 0.2 mass % | 40 | 60 | 500 | 24 | 100 |

As described above, the aluminum materials for electrolytic capacitor electrodes with excellent etching characteristics can be obtained by bringing the surface of the aluminum material into contact with the acidic aqueous solution containing one or more acids selected from the group consisting of sulfuric acid, hydrochloric acid, and acids including phosphorus, and then subjecting it to the final annealing. The capacitances are higher than those of the materials in Comparative Examples 1 and 2 in which the surface did not have contact with the acidic aqueous solution and Comparative Examples 3 and 4 in which the surface had contact with the aqueous nitric acid solution.

### Industrial applicability

The present invention can be used as a method for producing an aluminum material for electrolytic capacitor electrodes, aluminum material for electrolytic capacitor electrodes, method for producing an electrode material for electrolytic capacitors, and aluminum electrolytic capacitors.

## Claims

1. A method for producing an aluminum material for electrolytic capacitor electrodes, wherein a cold-rolled surface of an aluminum material is brought into contact with an acidic aqueous solution containing one or more acids selected from the group consisting of sulfuric acid, hydrochloric acid, and acids including phosphorus, and then the aluminum material is annealed.

2. The method for producing an aluminum material for electrolytic capacitor electrodes as recited in claim 1, wherein the aluminum material is degreased after cold rolling and before contacting with the acidic aqueous solution.

3. The method for producing an aluminum material for electrolytic capacitor electrodes as recited in claim 2, wherein the degreasing is carried out with an organic solvent.

4. The method for producing an aluminum material for electrolytic capacitor electrodes as recited in claim 2 or 3, wherein the degreasing is carried out with water containing a surfactant.

5. The method for producing an aluminum material for electrolytic capacitor electrodes as recited in any one of claims 1 to 4, wherein a concentration of the sulfuric acid in the acidic aqueous solution is not less than 0.0005 mass% and not more than 60 mass%.

6. The method for producing an aluminum material for electrolytic capacitor electrodes as recited in claim 5, wherein a concentration of the sulfuric acid in the acidic aqueous solution is not less than 1.2 mass% and not more than 30 mass%.

7. The method for producing an aluminum material for electrolytic capacitor electrodes as recited in claim 6, wherein a concentration of the sulfuric acid in the acidic aqueous solution is not less than 1.2 mass% and not more than 9.5 mass%.

8. The method for producing an aluminum material for electrolytic capacitor electrodes as recited in any one of claims 1 to 4, wherein a concentration of the hydrochloric acid in the acidic aqueous solution is not less than 0.0005 mass% and not more than 30 mass%.

9. The method for producing an aluminum material for electrolytic capacitor electrodes as recited in claim 8, wherein a concentration of the hydrochloric acid in the acidic aqueous solution is not less than 0.05 mass% and not more than 30 mass%.

10. The method for producing an aluminum material for electrolytic capacitor electrodes as recited in claim 9, wherein a concentration of the hydrochloric acid in the acidic aqueous solution is not less than 1.2 mass% and not more than 9.5 mass%.

11. The method for producing an aluminum material for electrolytic capacitor electrodes as recited in any one of claims 1 to 4, wherein the acid including phosphorus is orthophosphoric acid and a concentration of the orthophosphoric acid in the acidic aqueous solution is not less than 1.2 mass% and not more than 30 mass%.

12. The method for producing an aluminum material for electrolytic capacitor electrodes as recited in claim 11, wherein a concentration of the orthophosphoric acid in the acidic aqueous solution is not less than 1.2 mass% and not more than 9.5 mass%.

13. The method for producing an aluminum material for electrolytic capacitor electrodes as recited in any one of claims 1 to 12, wherein a temperature of the acidic aqueous solution is 10° C or higher and 95° C or lower, and a contact time of the aluminum material with the acidic aqueous solution is not less than 0.2 second and not more than 10 minutes.

14. The method for producing an aluminum material for electrolytic capacitor electrodes as recited in any one of claims 1 to 13, wherein the annealing is carried out in an inert atmosphere at 450 to 600° C.

15. The method for producing an aluminum material for electrolytic capacitor electrodes as recited in claim 14, wherein the annealing is carried out at 460 to 560°C.

16. The method for producing an aluminum material for electrolytic capacitor electrodes as recited in any one of claims 1 to 15, wherein an aluminum purity is not less than 99.9 mass%.

17. An aluminum material for electrolytic capacitor electrodes produced by the production method as recited in any one of claims 1 to 16.

18. The aluminum material for electrolytic capacitor electrodes as recited in claim 17, which is an anode material for medium or high voltages.

19. A method for producing an electrode material for electrolytic capacitors, wherein an aluminum material produced by the production method as recited in any one of claims 1 to 16 is subjected to etching.

20. The method for producing an electrode material for electrolytic capacitors as recited in claim 19, wherein at least a part of etching is a direct current etching.

21. An aluminum electrolytic capacitor wherein as an electrode material, an aluminum electrode material manufactured by the production method as recited in claim 19 or 20 is used.
